# EUROPEAN PATENT SPECIFICATION

(11) **EP 2 165 860 B1**
(45) Date of publication and mention of the grant of the patent: **22.05.2013**
(21) Application number: 09170503.8
(22) Date of filing: 17.09.2009
(51) Int. Cl.: B60C 15/06, B60C 9/20

(54) **Reinforcing structure for pneumatic tires**
Verstärkungsstruktur für Luftreifen
Structure de renfort pour pneus

(30) Priority: 18.09.2008 US 212679
(43) Date of publication of application: 24.03.2010
(73) Proprietor: The Goodyear Tire & Rubber Company, Akron, OH 44316-0001 (US)
(72) Inventor: Hamzeh, Osama, Kent, OH 44240 (US); Du, Mingliang, Copley, OH 44321 (US); Ding, Xu, West Hartford, CT 06107 (US); Kavaturu, Mahesh, L-8049, Strassen (LU); De Barsy, Olivier, L-8467, Eischen (LU); Toumni, Nizar, L-9053, Ettelbruck (LU)
(74) Representative: Kutsch, Bernd

(56) References cited:
- EP-A1- 0 295 898
- EP-A1- 2 050 586
- WO-A-2007/134743
- DE-A1- 2 630 657
- DE-A1- 3 222 405
- GB-A- 2 253 818
- JP-A- 60 163 705

## Description

### Field of the Invention

The present invention relates to pneumatic tires and, more particularly, to means of impeding cracking at ends of reinforcement structures of a pneumatic tire.

### Background of the Invention

A pneumatic vehicle tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Reinforcement belts are located radially outward of the carcass ply. Tread rubber and sidewall rubber are located axially and radially outward of the carcass ply.

The bead area is one part of the tire that contributes a substantial amount to the rolling resistance of the tire, due to cyclical flexure which also leads to heat buildup. Under conditions of severe operation, as with truck tires, the flexure and heating in the bead region can be especially problematic, leading to cracking of surrounding rubber. In particular, the ply turnup ends are prone to separation from adjacent structural elements of the tire. The ply is reinforced with materials such as nylon, polyester, rayon, and metal which have much greater stiffness (i.e., modulus of elasticity) than does the adjacent rubber compound of which much of the tire is made. The difference in elastic modulus of mutually adjacent tire elements leads to cracking and separation when the tire is stressed and deformed during use.

A variety of conventional structural design approaches have been used to manage the cracking and separation of tire elements in the bead regions of tires. For example, one method has been to provide a "flipper" surrounding the bead and a bead filler. The flipper works as a spacer that keeps the ply from making direct contact with the inextensible beads, allowing some degree of relative motion between the ply, where it turns upward under the bead, and the respective beads. In this role as a spacer, the flipper reduces the inevitable disparities of strain on the ply and on the adjacent rubber components of the tire (e.g., filler apex and sidewall rubber in the bead region and the elastomeric portions of the ply itself).

Prior to the use of steel-reinforced radial ply construction, conventional plies were reinforced with materials having substantially lower moduli of elasticity than that of steel. Accordingly, the stresses associated with heavy-duty tire use were more easily accommodated by the respectively adjacent components, such as the ply reinforcing materials and the adjacent rubber polymeric materials. Such tires were less durable than are those having metal reinforced plies. Still, disparities of respective moduli of elasticity led to cracking and ply separation under severe conditions, beginning at the ply turnup ends.

In addition to the use of flippers as a means by which to reduce the tendency of a ply to separate, another conventional method involves the placement of "chippers." A chipper is a circumferentially deployed metal or fabric layer disposed within the bead region in the portion of the tire where the bead fits onto the wheel rim. More specifically, the chipper lies inward of the wheel rim (i.e., toward the bead) and outward (i.e., radially outward relative to the bead, viewed in cross section) of the portion of the ply that turns upward around the bead. Chippers stiffen and increase the resistance to flexure of the adjacent rubber material, which is typically adjacent to the turnup ends.

Also, given that the ply is, on each side of the tire, clamped around, or anchored to, or "turned up" about, the respective bead, there exists a "turn-up end" (as viewed in the cross section of a tire) that extends radially outward within, and circumferentially about, each sidewall. Limits on the length of the ply turnup ends are made in order to locate the ends of the ply in positions where radial deformations of the tire are relatively small.

Stresses that result in the deposition of energy (i.e., the generation of heat) in the bead region, the turnup end region, and/or the belt edge region are frequently accompanied by strains that contribute to cracking and separation failures at turnup, flipper, chipper, and belt ends. A balanced design for a reinforced bead assembly of a tire has stress characteristics that lead to reduced flexural energy generation (heat buildup) and to strain characteristics that can be uniformly borne by mutually adjacent tire components in the bead region, including the turnup, flipper, and chipper ends.

Conventional radial-ply truck tires, in which the one or more plies and belts are reinforced with steel cables or cords, are prone to cracking and separation when exposed to severe service. Part of the cause of cracking and separation is related to the stresses described above and to the disparate moduli of elasticity of the respective metal and adjacent polymeric rubber compounds. As the tire undergoes flexure during heavy-duty use, flexure of the sidewalls in the region near to and immediately radially outward of the beads and the belts experience repeated flexural deformations in one or more directions, such as the radial and axial directions. Also, cracking and ply separation is especially problematic if the tire is overinflated or underinflated.

As stated above, a high stress/strain concentration region exists at ply, flipper, chipper, and belt ends. In addition, bonding between the sharp and narrow ending of reinforcement wires and adjacent compounds may be inadequate, due to lack of adhesive brass at tips of cut wires. Therefore, rubber is prone to crack initiation and propagation adjacent to the wire ends.

It would be desirable to provide a bead region and belt edge region design that can reduce cracking and separation initiation and propagation within radial tires exposed to severe service conditions. Particularly, it would be desirable to reduce the flexural heat buildup associated with the cyclical shearing stresses and concomitant cyclical shearing strains in the regions of truck tires exposed to severe operating conditions.

Conventional approaches for reducing cracking have added a gum strip-type compound adjacent the ply turnup and belt ends. These conventional approaches have not significantly altered the geometry or amount of crack initiation and propagation. Cracks still initiate and propagate through the unreinforced gum strip-type compound.

DE-A- 26 30 657 describes a pneumatic tire in accordance with the preamble of claim 1.

DE-A- 32 22 405 and WO-A- 2007/134743 each describe a tire comprising a bead reinforcing layer being encompassed by a U-shaped cap layer.

### Summary of the Invention

The invention relates to a pneumatic tire according to claim 1.

Dependent claims refer to preferred embodiments of the invention.

The first cap structure is preferably an annular cap structure and has a U-shaped cross-section for surrounding the first end portion. According to the present invention, the first cap structure is constructed of reinforced fabric with fibers oriented in the range from -45° to +45° with respect to a radial direction of the pneumatic tire.

According to one aspect of the present invention, the fibers of the first cap structure are aramid fibers.

According to another aspect of the present invention, the fibers of the first cap structure are nylon fibers.

According to still another aspect of the present invention, the first reinforcing structure is a flipper for absorbing strain between the annular bead portions and the carcass ply.

According to yet another aspect of the present invention, the first reinforcing structure is a steel cord chipper for absorbing strain between the turnup ends and a wheel rim on which the pneumatic tire is mounted.

According to still another aspect of the present invention, the fibers of the first cap structure are aramid fibers

According to yet another aspect of the present invention, the fibers of the first cap structure are nylon fibers.

According to still yet another aspect of the present invention, axially outwardmost portions of the turnup end portions of the carcass ply extend radially outward beyond the top of a wheel rim flange of the wheel rim and beyond the first reinforcing structure.

According to yet another aspect of the present invention, a preferably annular second cap structure encompasses the second end portion of the first reinforcing structure. The second cap structure preferably has a U-shaped cross-section for surrounding the second end portion. The second cap structure is constructed of reinforced fabric with fibers oriented in the range from -45° to +45° with respect to a radial direction of the pneumatic tire.

According to still another aspect of the present invention, the first reinforcing structure is a flipper for absorbing strain between the annular bead portions and the carcass ply.

According to yet another aspect of the present invention, a second reinforcing structure is disposed at one of the bead portions. The second reinforcing structure has a first end portion and a second end portion.

According to still another aspect of the present invention, the second reinforcing structure is a chipper for absorbing strain between the turnup ends and a wheel rim on which the pneumatic tire is mounted.

According to yet another aspect of the present invention, a preferably annular third cap structure encompasses the first end portion of the second reinforcing structure. The third cap structure preferably has a U-shaped cross-section for surrounding the first end portion. The third cap structure is preferably constructed of reinforced fabric with fibers oriented in the range from -45° to +45° with respect to a radial direction of the pneumatic tire.

According to still another aspect of the present invention, a preferably annular fourth cap structure encompasses the second end portion of the second reinforcing structure. The fourth cap structure preferably has a U-shaped cross-section for surrounding the second end portion. The fourth structure is preferably constructed of reinforced fabric with fibers oriented in the range from -45° to +45° with respect to a radial direction of the pneumatic tire.

### Brief Description of the Drawings

The structure, operation, and advantages of the invention will become more apparent upon contemplation of the following description taken in conjunction with the accompanying drawings, wherein:
FIG. 1 shows a schematic cross-sectional view of an example pneumatic tire for use with the present invention; and
FIG. 2 shows a schematic detailed view of the bead region of the tire of FIG. 1.

### Definitions

"Apex" or "bead filler apex" means an elastomeric filler located radially above the bead core and between the plies and the turnup plies.

"Axial" and "Axially" means the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Carcass" means the tire structure apart from the belt structure, tread, undertread over the plies, but including the beads.

"Chipper" refers to a narrow band of fabric or steel cords located in the bead area whose function is to reinforce the bead area and stabilize the radially inwardmost part of the sidewall.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Equatorial Plane" means the plane perpendicular to the tire's axis of rotation and passing through the center of its tread; or the plane containing the circumferential centerline of the tread.

"Flipper" refers to a reinforcing fabric around the bead wire for strength and to tie the bead wire in the tire body.

"Gauge" refers generally to a measurement and specifically to thickness.

"Lateral" means a direction parallel to the axial direction.

"Ply" means a cord-reinforced layer of rubber-coated radially deployed or otherwise parallel cords.

"Radial" and "radially" mean directions radially toward or away from the axis of rotation of the tire.

"Radial Ply Structure" means one or more carcass plies of which at least one ply has reinforcing cords oriented at an angle of between 65° and 90° with respect to the equatorial plane of the tire.

"Sidewall" means that portion of a tire between the tread and the bead.

"Toe guard" refers to the circumferentially deployed elastomeric rim-contacting portion of the tire axially inward of each bead.

"Turnup end" means the portion of a carcass ply that turns upward (i.e., radially outward) from the beads about which the ply is wrapped.

### Detailed Description of the Example Embodiment

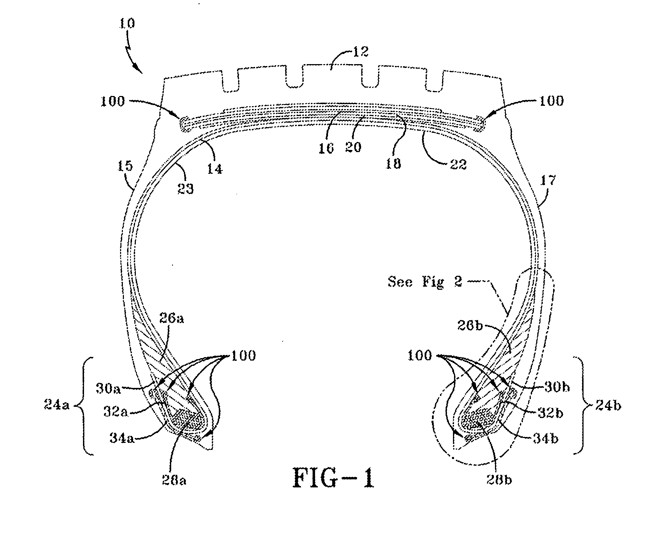

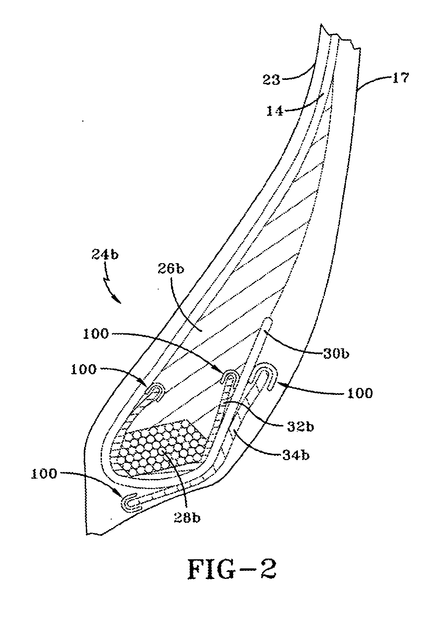

FIG. 1 shows a schematic cross-sectional view an example pneumatic tire 10 for use with the present invention. The pneumatic tire 10 has a tread 12, preferably a single carcass ply 14, an innerliner 23, a belt structure 16 comprising two belts 18, 20, a carcass structure 22, two sidewalls 15, 17, and bead regions 24a, 24b comprising bead filler apexes 26a, 26b and inextensible beads 28a, 28b. The example tire 10 is suitable for mounting on a rim of a vehicle, such as a truck. Preferably, the tire 10 is a truck tire. The carcass ply 14 includes a pair of axially opposite turnup end portions 30a, 30b, each of which is secured to a respective one of the beads 28a, 28b. Each turnup end portion 30a or 30b of the carcass ply 14 is wrapped around the respective bead (28b, in FIG. 2) to a position sufficient to anchor each axial end portion 30a, 30b.

The carcass ply 14 may be a rubberized ply having a plurality of substantially parallel extending carcass reinforcing members made of such material as polyester, rayon, or similar organic polymeric compounds. Axially outwardmost portions of the turnup end portions 30a, 30b of the carcass ply 14 may extend radially outward by a distance of between 15 millimeters and 30 millimeters beyond a top of a wheel rim flange of a wheel rim.

The turnup end portions 30a, 30b of the carcass ply 14 may engage axial outer surfaces of flippers 32a, 32b and axial inner surfaces of chippers 34a, 34b. The chippers 34a, 34b may consist of narrow bands of steel cloth located in the bead area for the purpose of reinforcing the bead area and stabilizing the axially inwardmost part of the sidewalls 15, 17.

The flippers 32a, 32b wrap around the beads 28a, 28b and extend radially outward into the sidewall regions of the tire 10. The axially inward portion of flippers 32a, 32b terminate within the bead-filler apexes 26a, 26b. The axially outward portions of the flippers 32a, 32b lie radially inward of the turnup end portions 30a, 30b, which are also located radially beyond the radially outermost reach of the chippers 34a, 34b. An axially outermost portion of each flipper 32a, 32b may extend radially to within between 7 mm and 15 mm of the radially outermost reach of the turnup end portions 30a, 30b of the carcass ply 14.

The flippers 32a, 32b may be made of nylon fabric or other suitable thermoplastic polymers capable of extension when woven into fabrics, sheets, etc. of extreme toughness, strength and elasticity. The nylon fabric may be woven, or it can be of a monofilament or multifilament type of material in which the cords run in the same direction. The nylon fabric of the flippers 32a, 32b may have a thread pitch of between 5 and 30 ends per inch (2-12 ends/cm) and an overall thickness in the range of 0.3 to 1.2 mm, preferably 10 to 20 ends per inch (4-8 ends/cm) and 0.5 to 1.0 mm gauge. The nylon cords of the flippers 32a, 32b may be oriented at an angle of between 20 degrees and 50 degrees with respect to the radial direction, preferably at an angle of between 25 degrees and 35 degrees. The flippers 32a, 32b may be termed "active" because they actively absorb (i.e. during tire deflection) differential strain between the very rigid beads 28a, 28b and less rigid metal reinforced carcass ply 14.

The chippers 34a, 34b may be made of steel cords. Each chipper 34a, 34b may be disposed adjacent to the portion of the carcass ply 14 that is wrapped around the beads 28a, 28b. Further, the chippers 34a, 34b may be disposed on opposite sides of the portion of the carcass ply 14 from the flippers 32a, 32b. The axially inwardmost portion of the chippers 34a, 34b may be disposed in a portion of the bead regions 24a, 24b that, when the tire 10 is mounted on a wheel, would be closest to a circularly cylindrical part of the wheel. The axially and radially outwardmost portion of the chippers 34a, 34b may be disposed in a portion of the bead regions 24a, 24b that, when the tire 10 is mounted on a wheel, would be inward of a circular portion of a wheel-rim flange, being separated from the circular portion of the wheel-rim flange by tire rubber. In other words, the chippers 34a, 34b are disposed circumferentially about the radially inwardmost portion of carcass ply 14 where it turns up around the beads 28a, 28b. The chippers 34a, 34b may extend radially outward, being more or less parallel with the turned up ends 30a, 30b of the carcass ply 14. The disposition of the chippers 34a, 34b may be mirror-symmetric with respect to the bead-regions 24a, 24b.

The chippers 34a, 34b protect the portion of the carcass ply 14 that wraps around the beads 28a, 28b from strains in the rubber that separates the chippers from a wheel rim. The chippers 24a, 24b reinforce the bead regions 24a, 24b and stabilize the radially inwardmost part of the sidewalls 15, 17. In other words, the chippers 34a, 34b, being constructed of relatively flexible steel cords encompassed with an elastomeric material, may absorb deformation in a way that minimizes transmission of stress-induced shearing strains that arise inward from a wheel rim, through the rubber portion to the turnup ends 30a, 30b of the carcass ply 14 where the chippers are most immediately adjacent to the rigid beads 28a, 28b.

In accordance with one embodiment of the present invention, the tire 10 further includes cap structures 100 encompassing, or wrapping around, ends of the flippers 32a, 32b, chippers 34a, 34b, and belt structure 16. The cap structure 100 has demonstrated superior advantage to improve fatigue life at the ends of the flippers 32a, 32b, chippers 34a, 34b, and belt structure 16. The cap structure 100 is U-shaped or substantially U-shaped in cross-section (Figs. 1-2) and constructed of reinforced fabric with fibers oriented in the range from -45° to +45° with respect to a radial direction of the tire 10. The cap structure 100 surrounds the ends of the flippers 32a, 32b, chippers 34a, 34b, and belt structure 16 by curving around the ends at least 180° when viewed in cross-section (Figs. 1-2). The ends of the flippers 32a, 32b, chippers 34a, 34b, and belt structure 16 may thereby be protected by a toroidal cap structure 100 adjacent the ends of the flippers, chippers, and belt structure and thereby contain any cracking in the rubber that may propagate from the ends of the flippers, chippers, and belt structure to the rubber outside of the cap structure.

Thus, the cap structure 100 has been shown to accomplish two goals: 1) the cap structure contains existing cracks adjacent the ends of the flippers 32a, 32b, chippers 34a, 34b, and belt structure 16 within the U-shaped cap structure; and 2) the cap structure relocates the cracks. The cap structure 100 replaces the sharp and narrow interface area at the ends of the flippers 32a, 32b, chippers 34a, 34b, and belt structure 16 with the rounded and larger U-cap structure thereby smoothing the transition, or interface, both in terms of material and geometry.

The reinforced U-cap structure 100 thus greatly increases crack resistance capacity and, in effect, stops crack propagation through the U-cap structure. Further, crack driving forces at the exterior of the U-cap structure 100 are greatly contained and substantially reduced by the U-cap structure, thereby significantly delaying, if not completely eliminating, crack initiation at the exterior of the U-cap structure for the life of the tire. In other words, the reinforced U-cap structure 100 shifts and greatly delays crack initiation from the ends of the flippers 32a, 32b, chippers 34a, 34b, and belt structure 16 to the smooth exterior of the U-cap structure.

Fig. 2 details a schematic configuration of a bead area 24b featuring the U-cap structures 100 and their reinforcement around the ends of the flippers 32a, 32b and chippers 34a, 34b. In this example, the U-cap structures 100 may have a total cross-sectional U-length of from 20 to 30 mm such as 25 mm. The U-cap reinforcement may be, for example, Aramid (Kevlar).

Thus, the cap structure 100 may be applied to ends of the flippers 32a, 32b and chippers 34a, 34b to improve bead area durability. Nylon, PET, PEN, rayon, or any suitable material, or any suitable combination of materials (i.e., hybrid) may be used for reinforcing the cap structure 100. Less costly material may obviously reduce cost of the tire.

One conventional tire has utilized a reinforced gum strip wrapped around single belt edges to increase high speed durability. However, this conventional approach has not provided a crack barrier in the region between belts. In accordance with another aspect of the present invention, as shown in Fig. 1, the tire 10 includes cap structures 100 encompassing, or wrapping around, ends of all of the multiple belts (in this example two belts 18, 20). The cap structure 100 has demonstrated superior advantage to improve fatigue life at the ends of multiple belts 18, 20. The cap structure 100, similar to above, may be U-shaped in cross-section (Figs. 1) and constructed of reinforced fabric with fibers oriented in the range from -45° to +45° with respect to a radial direction of the tire 10. The cap structure 100 surrounds the ends of multiple belts 18, 20 by curving around the ends at least 180° when viewed in cross-section (Figs. 1). The ends of the multiple belts 18, 20 may thereby be protected by a toroidal cap structure 100 adjacent the ends of multiple belts 18, 20 and thereby contain any cracking in the rubber that may propagate from between multiple belts and/or the ends of multiple belts to the rubber outside of the cap structure.

Thus, the cap structure 100 has been shown to accomplish two goals: 1) the cap structure contains existing cracks, originating both outside of the multiple belts 18, 20 and between the multiple belts, adjacent the ends of the multiple belts within the U-shaped cap structure; and 2) the cap structure relocates the cracks. The cap structure 100 replaces the sharp and narrow interface area at the ends of the multiple belts 18, 20 with the rounded and larger U-cap structure around the multiple belts thereby smoothing the transition, or interface, both in terms of material and geometry.

The reinforced U-cap structure 100 thus greatly increases crack resistance capacity and, in effect, stops crack propagation through the U-cap structure. Further, crack driving forces at the exterior of the U-cap structure 100 are greatly contained and substantially reduced by the U-cap structure, thereby significantly delaying, if not completely eliminating, crack initiation at the exterior of the U-cap structure for the life of the tire. In other words, the reinforced U-cap structure 100 shifts and greatly delays crack initiation from the ends of the multiple belts 18, 20 to the smooth exterior of the U-cap structure.

In this example, the U-cap structures 100 at the multiple belts 18, 20 may have a total cross-sectional U-length of from 20 to 30 mm such as 25 mm. The U-cap reinforcement may be, for example, Aramid (Kevlar). Thus, the cap structure 100 may be applied to ends of the multiple belts 18, 20 to improve belt and tread area durability. Nylon, PET, PEN, rayon, or any suitable material, or any suitable combination of materials (i.e., hybrid) may be used for reinforcing the cap structure 100. Less costly material may obviously reduce cost of the tire.

As stated above, conventional flipper, chipper and belt ends have sharp, narrow, and bare transitions between the metal ply ends and adjacent polymer compounds. Thus, macro cracks appear and propagate from the adjacent polymer compounds, typically surrounding rubber. The unique, reinforced cap structure 100 may shield or contain the cracks within the interior of the U-shaped cap, and further introduce a relatively large and smooth interface transition between the fabric of the cap structure and the adjacent polymer compounds, thus greatly improving bead and overall tire durability

## Claims

1. A pneumatic tire comprising:
a tread (12);
two annular bead portions (24a, 24b);
a carcass (14) ply having two turnup end portions (30a, 30b), each wrapped around one of the annular bead portions (24a, 24b);
a first reinforcing structure (32a, 32b, 34a, 34b) disposed at one of the bead portions (24a, 24b), the first reinforcing structure having a first end portion and a second end portion; and
a first cap structure (100) encompassing the first end portion of the first reinforcing structure, the first cap structure (100) having a substantially U-shaped cross-section for surrounding the first end portion, the first cap structure comprising reinforced fabric with fibers oriented in the range from -45° to +45° with respect to a radial direction of the pneumatic tire (10),
**characterized in that** the pneumatic tire (10) further includes a second cap structure (100) encompassing the second end portion of the first reinforcing structure (32a, 32b, 34a, 34b), the second cap structure (100) having a substantially U-shaped cross-section for surrounding the second end portion, the second cap structure comprising reinforced fabric with fibers oriented in the range from -45° to +45° with respect to a radial direction of the pneumatic tire (10).

2. The pneumatic tire as set forth in claim 1 wherein the first reinforcing structure is a flipper (32a, 32b) for absorbing strain between the annular bead portions (24a, 24b) and the carcass ply (14).

3. The pneumatic tire as set forth in at least one of the previous claims wherein the first reinforcing structure is a chipper (34a, 34b) for absorbing strain between the turnup end portions (30a, 30b) and a wheel rim on which the pneumatic tire may be mounted.

4. The pneumatic tire as set forth in claim 3 wherein the chipper (34a, 34b) is a steel cord chipper.

5. The pneumatic tire as set forth in at least one of the previous claims wherein the fibers of the first cap structure (100) are nylon fibers.

6. The pneumatic tire as set forth in at least one of the previous claims 1 to 4 wherein the fibers of the first cap structure (100) are aramid fibers.

7. The pneumatic tire as set forth in one of the previous claims wherein axially outwardmost portions of the turnup end portions (30a, 30b) of the carcass ply (14) extend radially outward beyond the top of a wheel rim flange of a wheel rim on which the tire may be mounted and beyond the first reinforcing structure (32a, 32b, 34a, 34b).

8. The pneumatic tire as set forth in at least one of the previous claims further including a second reinforcing structure (32a, 32b, 34a, 34b) disposed at one of the bead portions (24a, 24b), the second reinforcing structure having a first end portion and a second end portion.

9. The pneumatic tire as set forth in claim 8 wherein the second reinforcing structure is a chipper (34a, 34b) for absorbing strain between the turnup end portions (30a, 30b) and a wheel rim on which the pneumatic tire may be mounted.

10. The pneumatic tire as set forth in claim 1 further including a third cap structure encompassing the first end portion of the second reinforcing structure, the third cap structure having a substantially U-shaped cross-section for surrounding the first end portion, the third cap structure comprising reinforced fabric with fibers oriented in the range from -45° to +45° with respect to a radial direction of the pneumatic tire (10).

11. The pneumatic tire as set forth in claim 10 further including a fourth cap structure encompassing the second end portion of the second reinforcing structure, the fourth cap structure having a substantially U-shaped cross-section for surrounding the second end portion, the fourth structure comprising reinforced fabric with fibers oriented in the range from -45° to +45° with respect to a radial direction of the pneumatic tire (10).

## Patentansprüche

1. Luftreifen, umfassend:
eine Lauffläche (12);
zwei ringförmige Wulstbereiche (24a, 24b);
eine Karkassenlage (14) mit zwei Umschlag-Endabschnitten (30a, 30b), die jeder um einen der ringförmigen Wulstbereiche (24a, 24b) herumgeschlagen sind;
eine erste Verstärkungsstruktur (32a, 32b, 34a, 34b), die an einem der Wulstbereiche (24a, 24b) angeordnet ist, wobei die erste Verstärkungsstruktur einen ersten Endabschnitt und einen zweiten Endabschnitt aufweist; und
eine erste Kappenstruktur (100), die den ersten Endabschnitt der ersten Verstärkungsstruktur umgibt, wobei die erste Kappenstruktur (100) einen im Wesentlichen U-förmigen Querschnitt aufweist, um den ersten Endabschnitt zu umgeben, wobei die erste Kappenstruktur verstärktes Gewebe mit Fasern umfasst, die im Bereich von -45° bis +45° in Bezug auf eine radiale Richtung des Luftreifens (10) orientiert sind,
**dadurch gekennzeichnet, dass** der Luftreifen (10) weiter eine zweite Kappenstruktur (100) beinhaltet, die den zweiten Endabschnitt der ersten Verstärkungsstruktur (32a, 32b, 34a, 34b) umgibt, wobei die zweite Kappenstruktur (100) einen im Wesentlichen U-förmigen Querschnitt aufweist, um den zweiten Endabschnitt zu umgeben, wobei die zweite Kappenstruktur verstärktes Gewebe mit Fasern umfasst, die im Bereich von -45° bis +45° in Bezug auf eine radiale Richtung des Luftreifens (10) orientiert sind.

2. Luftreifen, wie in Anspruch 1 dargelegt, wobei die erste Verstärkungsstruktur eine Wulstfahne (32a, 32b) zum Absorbieren von Dehnung zwischen den ringförmigen Wulstbereichen (24a, 24b) und der Karkassenlage (14) ist.

3. Luftreifen, wie in mindestens einem der vorgenannten Ansprüche dargelegt, wobei die erste Verstärkungsstruktur ein Wulstverstärker (34a, 34b) zum Absorbieren von Dehnung zwischen den Umschlag-Endabschnitten (30a, 30b) und einer Radfelge, auf welcher der Luftreifen montiert werden kann, ist.

4. Luftreifen, wie in Anspruch 3 dargelegt, wobei der Wulstverstärker (34a, 34b) ein Stahlkord-Wulstverstärker ist.

5. Luftreifen, wie in mindestens einem der vorgenannten Ansprüche dargelegt, wobei die Fasern der ersten Kappenstruktur (100) Nylonfasern sind.

6. Luftreifen, wie in mindestens einem der vorgenannten Ansprüche 1 bis 4 dargelegt, wobei die Fasern der ersten Kappenstruktur (100) Aramidfasern sind.

7. Luftreifen, wie in einem der vorgenannten Ansprüche dargelegt, wobei axial äußerste Teile der Umschlag-Endabschnitte (30a, 30b) der Karkassenlage (14) sich radial auswärts über die Oberseite eines Radfelgenhorns einer Radfelge, auf welcher der Reifen montiert werden kann, und über die erste Verstärkungsstruktur (32a, 32b, 34a, 34b) hinaus erstrecken.

8. Luftreifen, wie in mindestens einem der vorgenannten Ansprüche dargelegt, weiter eine zweite Verstärkungsstruktur (32a, 32b, 34a, 34b) beinhaltend, die an einem der Wulstbereiche (24a, 24b) angeordnet ist, wobei die zweite Verstärkungsstruktur einen ersten Endabschnitt und einen zweiten Endabschnitt aufweist.

9. Luftreifen, wie in Anspruch 8 dargelegt, wobei die zweite Verstärkungsstruktur ein Wulstverstärker (34a, 34b) zum Absorbieren von Dehnung zwischen den Umschlag-Endabschnitten (30a, 30b) und einer Radfelge, auf welcher der Luftreifen montiert werden kann, ist.

10. Luftreifen, wie in Anspruch 1 dargelegt, weiter eine dritte Kappenstruktur beinhaltend, die den ersten Endabschnitt der zweiten Verstärkungsstruktur umgibt, wobei die dritte Kappenstruktur einen im Wesentlichen U-förmigen Querschnitt aufweist, um den ersten Endabschnitt zu umgeben, wobei die dritte Kappenstruktur verstärktes Gewebe mit Fasern umfasst, die im Bereich von -45° bis +45° in Bezug auf eine radiale Richtung des Luftreifens (10) orientiert sind.

11. Luftreifen, wie in Anspruch 10 dargelegt, weiter eine vierte Kappenstruktur beinhaltend, die den zweiten Endabschnitt der zweiten Verstärkungsstruktur umgibt, wobei die vierte Kappenstruktur einen im Wesentlichen U-förmigen Querschnitt aufweist, um den zweiten Endabschnitt zu umgeben, wobei die vierte Struktur verstärktes Gewebe mit Fasern umfasst, die im Bereich von -45° bis +45° in Bezug auf eine radiale Richtung des Luftreifens (10) orientiert sind.

## Revendications

1. Bandage pneumatique comprenant :
une bande de roulement (12) ;
deux portions de talons annulaires (24a, 24) ;
une nappe de carcasse (14) possédant deux portions terminales de retournement vers le haut (30a, 30b), chacune venant s'enrouler autour d'une des portions de talons annulaires (24a, 24b) ;
une première structure de renforcement (32a, 32b, 34a, 34b) disposée sur une des portions de talons (24a, 24b), la première structure de renforcement possédant une première portion terminale et une deuxième portion terminale ; et
une première structure de sommet (100) renfermant la première portion terminale de la première structure de renforcement, la première structure de sommet (100) possédant une section transversale d'une configuration essentiellement en U pour entourer la première portion terminale, la première structure de sommet comprenant du tissu renforcé comportant des fibres orientées dans la plage de -45° à +45° par rapport à la direction radiale du bandage pneumatique (10) ;
**caractérisé en ce que** le bandage pneumatique (10) englobe en outre une deuxième structure de sommet (100) renfermant la deuxième portion terminale de la première structure de renforcement (32a, 32b, 34a, 34b), la deuxième structure de sommet (100) possédant une section transversale d'une configuration essentiellement en U pour entourer la deuxième portion terminale, la deuxième structure de sommet comprenant du tissu renforcé comportant des fibres orientées dans la plage de -45° à +45° par rapport à la direction radiale du bandage pneumatique (10).

2. Bandage pneumatique selon la revendication 1, dans lequel la première structure de renforcement est une languette de protection (32a, 32b) pour absorber les déformations entre les portions de talons annulaires (24a, 24b) et la nappe de carcasse (14).

3. Bandage pneumatique selon au moins une des revendications précédentes, dans lequel la première structure de renforcement est un renfort d'appui (34a, 34b) pour absorber les déformations entre les portions terminales de retournement vers le haut (30a, 30b) et une jante de roue sur laquelle le bandage pneumatique peut être monté.

4. Bandage pneumatique selon la revendication 3, dans lequel le renfort d'appui (34a, 34b) est un renfort d'appui constitué par des câblés en acier.

5. Bandage pneumatique selon au moins une des revendications précédentes, dans lequel les fibres de la première structure de sommet (100) sont des fibres de nylon.

6. Bandage pneumatique selon au moins une des revendications précédentes 1 à 4, dans lequel les fibres de la première structure de sommet (100) sont des fibres d'aramide.

7. Bandage pneumatique selon au moins une des revendications précédentes, dans lequel les portions les plus externes en direction axiale des portions terminales de retournement vers le haut (30a, 30b) de la nappe de carcasse (14) s'étendent en direction radiale vers l'extérieur au-delà du sommet du rebord d'une jante de roue sur laquelle le bandage pneumatique peut être monté et au-delà de la première structure de renforcement (32a, 32b, 34a, 34b).

8. Bandage pneumatique selon au moins une des revendications précédentes, englobant en outre une deuxième structure de renforcement (32a, 32b, 34a, 34b) disposée sur une des portions de talons (24a, 24b), la deuxième structure de renforcement possédant une première portion terminale et une deuxième portion terminale.

9. Bandage pneumatique selon la revendication 8, dans lequel la deuxième structure de renforcement est un renfort d'appui (34a, 34b) pour absorber les déformations entre les portions terminales de retournement vers le haut (30a, 30b) et une jante de roue sur laquelle le bandage pneumatique peut être monté.

10. Bandage pneumatique selon la revendication 1, englobant en outre une troisième structure de sommet renfermant la première portion terminale de la deuxième structure de renforcement, la troisième structure de sommet possédant une section transversale d'une configuration essentiellement en U pour entourer la première portion terminale, la troisième structure de sommet comprenant du tissu renforcé comportant des fibres orientées dans la plage de -45° à +45° par rapport à la direction radiale du bandage pneumatique (10).

11. Bandage pneumatique selon la revendication 10, englobant en outre une quatrième structure de sommet renfermant la deuxième portion terminale de la deuxième structure de renforcement, la quatrième structure de sommet possédant une section transversale d'une configuration essentiellement en U pour entourer la deuxième portion terminale, la quatrième structure de sommet comprenant du tissu renforcé comportant des fibres orientées dans la plage de -45° à +45° par rapport à la direction radiale du bandage pneumatique (10).
